# EUROPEAN PATENT SPECIFICATION

(11) **EP 2 826 592 B1**
(45) Date of publication and mention of the grant of the patent: **08.07.2020**
(21) Application number: 14166870.7
(22) Date of filing: 02.05.2014
(51) Int. Cl.: B24B 13/005, B24B 9/14

(54) **Multi part blocking piece**
Mehrteiliges Blockierstück
Pièce de blocage à parties multiples

(30) Priority: 06.05.2013 LU 92190
(43) Date of publication of application: 21.01.2015
(73) Proprietor: Satisloh AG, 6340 Baar (CH)
(72) Inventor: Savoie, Marc, 35578 Wetzlar (DE)
(74) Representative: Sonnenberg, Fred

(56) References cited:
- EP-A1- 2 093 018
- WO-A1-03/018253
- DE-A1- 2 619 985
- DE-A1- 4 003 002
- US-A1- 2007 105 490

## Description

### TECHNICAL FIELD OF THE INVENTION

The present invention generally relates to a workpiece support block ("blocking piece") for supporting an optical workpiece during the processing thereof. In particular, the invention relates to a blocking piece for holding a spectacle lens for processing thereof, as used in prescription workshops in masses, that is to say production workshops for manufacturing individual spectacle lenses from customary materials (mineral glass, polycarbonate, PMMA, CR 39, HI index, etc.) according to a prescription. The invention also concerns a set of blocking pieces and a method for manufacturing spectacle lenses according to a prescription.

### BACKGROUND OF THE INVENTION AND PRIOR ART

An ophthalmic lens blank generally has a first face with a predetermined curvature and a second face, opposite the first face on which a desired surface contour is generated by a machining process. The overall process is generally referred to as "lens surfacing" and the overall object is to yield a finished spectacle lens so that the first and second face curvatures cooperate to yield desired optical properties. In addition to this the first and/or second faces of the lens are usually coated to provide the finished spectacle lens with an enhanced ability to resist scratching (by means of a "hard coating"), with a low residual reflection and a desired color (by means of an "antireflection coating"), and/or with certain surface properties such as hydrophobic, oleophobic and dust repelling properties (by means of a "top coating"). Usually also a further machining process takes place (the so-called "edging"), the aim of which is to finish-machine the edge of the spectacle lens in such a way that the spectacle lens may be inserted into a spectacle frame. In all these process steps the spectacle lens (blank) must somehow be held in the machining machine(s) and coating apparatus respectively.

In more detail, hitherto the following main process steps are usually carried out in prescription workshops: Firstly, a suitable right and/or left ophthalmic lens blank is removed from a semifinished product store. The term "semifinished" is used to mean that the spectacle lens blanks, which are usually round or oval in plan view and have not yet been edged, have already been molded, machined or in another way contoured (surfaced) on one of their two optically active faces only. The spectacle lens blanks are then prepared for the blocking operation, namely by applying a suitable protective film or a suitable protective lacquer to protect the optically active face which has already been machined or contoured, i.e. the first face or blocking face.

The so-called "blocking" of the ophthalmic lens blanks then takes place. During this, the spectacle lens blank is joined to a suitable block piece, for example a lens block according to German standard DIN 58766 or document EP 1 593 458 A2. To this end, the block piece is firstly brought into a predefined position with respect to the protected first face of the spectacle lens blank, and then in this position the space between block piece and spectacle lens blank is filled with a molten material (normally a metal alloy or wax) or an adhesive composition that is curable, e.g., by UV or visible light, as described in the earlier European patent application 07 013 158.6 by the same applicant for instance. Once this material has solidified or cured, the block piece forms a holder or support for machining the second face of the spectacle lens blank. The block piece is grasped by a chuck or other suitable coupling means during lens generation to provide in particular secure mounting to the profiling machine while avoiding damage to the lens.

Lens surfacing is carried out then using profiling machines which typically have a cutter of some type that is moved across the second face of the ophthalmic lens blank to give the second face its macrogeometry according to the prescription. The spectacle lens blank may be stationary or rotating during the cutting operation, depending on the particular profiling generator being used. Typical machining processes for surfacing spectacle lenses include single point diamond turning (as the presently preferred fine cutting process for plastic materials and described in, e.g., document EP 1 719 585 A2 by the same applicant), diamond tool fly-cutting, milling (as the presently preferred rough cutting process for plastic materials and described in, e.g., document EP 0 758 571 A1 by the same applicant), and grinding processes, applied depending on the lens material.

Usually fine machining of the ophthalmic lenses then takes place, in which the pre-machined second face of the respective spectacle lens blank is given the desired microgeometry, as described, e.g., in documents EP 1 473 116 A1 and EP 1 698 432 A2 by the same applicant. Depending on inter alia the material of the spectacle lenses, the fine machining process is divided into a fine grinding operation and a subsequent polishing operation, or includes only a polishing operation if a polishable second face has already been produced during the pre-machining stage.

Only after the polishing operation is the ophthalmic lens blank separated from the lens block ("deblocking") before cleaning steps are carried out. Then the coating process(es) take(s) place that, depending on among other things the material of the lens blank, may include spin (or dip) coating of the deblocked spectacle lens blank so as to provide at least the second face of the lens blank with a hard coating or the like, as described, e.g., in the earlier U.S. patent application SN 11/502,306 , wherein the spectacle lens blank is held in the spin coating apparatus by means of a lens holder that has a suction cup for instance.

At any rate coating includes vacuum coating of the deblocked spectacle lens blank so as to provide at least the second face of the lens blank with an antireflection coating and optionally a top coating serving the above mentioned purpose(s). In the vacuum coating process the spectacle lens blank is clamped to a substrate carrier of a rotary carrier device that is located in a vacuum chamber in a vertically spaced relation with respect to an evaporation source for emitting a vapor stream onto the lens blank mounted on the substrate carrier, as described, e.g., in document EP 0 806 492 A1.

After the coating step(s) the ophthalmic lens blank usually is edged so that the spectacle lens can be inserted into a spectacle frame. To this end, the coated spectacle lens blank is blocked again, at this time however to a different, smaller block piece by means of an adhesive film portion for instance, as described, e.g., in document EP 1 243 381 A2 by the same applicant. The edging process may also include the forming of bores, grooves, channels and/or bevels corresponding to the respective mounting requirements in the edge area of the spectacle lens, as described, e.g., in document EP 1 243 380 A2 by the same applicant.

Finally, after edging and a further deblocking step the spectacle lens is cleaned again and ready for inspection and insertion into / mounting to the spectacle frame.

One disadvantage of the conventional overall process as outlined above consists in the fact that the spectacle lens blank needs to be deblocked after surfacing prior to coating, and then again blocked after coating prior to edging, for this requiring manual operations that are time-consuming, labor-intensive and add the risk to damage the lens.

In this connection, documents US 5 210 695 A and US 5 341 604 A disclose a system providing a lens blank and block assembly capable of being mounted in any of a surface generating machine, a finishing, i.e. lapping or polishing apparatus and an edging machine without requiring re-blocking of the lens in order to compensate for axis shifts, wherein the lens block is formed from a plastic material capable of being readily cut together with the lens blank in the edging machine. The proposed lens block however is not intended or suitable to be used in coating processes, in particular vacuum coating processes.

In this regard, document WO 2007/017385 A2 proposes a block piece for holding an optical lens to be machined, with a coupling part for holding in a workpiece chuck and with a holding part for fastening the lens, the latter having a convex or concave holding surface corresponding to a first side of the lens, wherein the holding surface is, according to the shape of the lens to be held, provided in the form of a negative aspherical, toric, progressive or free-form surface, and the block piece is made from a plastic material that can be machined. Although this document generally mentions that the lens can remain on the block piece during a coating process, it does not disclose or address how this could be done in a vacuum coating process in which the lens is subjected to a vacuum of, e.g., 5*10<-3> mbar. It can be expected that liquids from the surfacing and cleaning processes will remain in particular in the "equalizing and pressure medium channels" provided in the proposed block piece, which liquids can excessively prolong the time required to reach, if at all, the necessary vacuum and in addition may lead to impure coating conditions resulting in an imperfect coating.

Another problem with the conventional overall process as outlined above is that, in particular if the block piece is made from a plastic material, and the block piece is supported in the surfacing machine(s) by means of a collet chuck or the like which applies a radial compression force thereon, the block piece may assume a shape other than that which it naturally assumes in the absence of these forces. Any such deformation is transferred to the spectacle lens blank blocked on the block piece so that the curve which is cut into the surface of the lens blank may become distorted when the block piece is removed from the chuck and the lens blank is deblocked from the block piece and resumes its natural shape. This problem becomes particularly acute in the manufacture of free-form spectacle lenses requiring very precise tolerances. Any slight distortion of the curve upon deblocking the spectacle lens from the block piece may take it out of the tolerance range of the particular prescription, thereby rendering it useless for its desired purpose and resulting in substantial waste. Finished ophthalmic lenses are generally very thin, flex easily and are thus prone to such deformations.

Still another problem with the conventional process in prescription workshops is associated with in particular the single point diamond turning as the presently preferred fine cutting process for spectacle lens blanks made from plastic materials. This surfacing process as such is susceptible to small, but unacceptable errors at the center of rotation of the lens blank that are typically caused by errors of machine and tool calibration, as explained in great detail in document EP 1 719 584 A1 by the same applicant. This, coupled to certain limitations of the subsequent (flexible) polishing process, where it can be difficult to totally "clean up" or remove such center errors, have led to certain limitations in the amount of prism (i.e. surface tilt or shift with respect to the axis of rotation) permissible to cut and polish in such combined surfacing process. Experiments have shown that it can be relatively easy to cut and polish surfaces having 2 to 3 degrees of prism at the center with accurate centers, however greater amounts of prism at the center can pose problems.

A known method (see, e.g., document US 6 913 356 B2) for fitting a block piece to a semifinished blank of an ophthalmic lens intended to have a particular prism generally consists of positioning the lens blank on a fixed base, in a centered and angularly defined manner, so that the finished face of the lens blank bears conjointly on a plurality of bearing points of the base, defining an orientation of the block piece relative to the lens blank, orienting the block piece in the defined manner, and fixing the block piece to the finished face while maintaining orientation, by means of a castable low melting point metal alloy as the blocking material.

Once the lens blank is blocked on the block piece with the predetermined amount of prism that the spectacle lens shall have after surfacing, there is no need to generate, i.e. cut any prism during the surfacing process. However, one disadvantage of this known approach consists in the fact that, if the lens blank is blocked with a greater amount of prism, say 7 or 8 degrees of prism, the thickness of the wedge-shaped layer of blocking material between lens blank and block piece strongly varies along the prism axis. This gives rise to a different amount of shrinkage of the blocking material in the thickness direction along the prism axis when it solidifies (or cures if an adhesive composition would be used), which shrinkage in turn may bend/distort (or even shift with respect to the block piece) the blocked lens blank - as described in the earlier European patent application 07 013 158.6 by the same applicant - so that, again, the curve which is cut into the surface of the lens blank may become distorted when the lens blank is deblocked from the block piece and resumes its natural shape. For this reason the amount of prism permissible to be blocked is also limited in the known approach.

In an attempt to render the block piece more universally usuable the applicant has previously suggested that the block piece should comprise a basic body that has a workpiece mounting face portion against which the workpiece can be blocked by means of a blocking material, and a clamping portion via which the workpiece blocked on the basic body can be fixed in a machine or apparatus for processing of the workpiece; wherein the basic body consists of mineral glass or a plastic material having particular degasing properties (EP2093018). In this application it is indicated to be favourable to have the block piece made of material transparent for UV or VIS. It is however also indicated that using either plastic material or mineral glass would have an inherent drawback, respectively with respect to the workability or the capacities to adequately support lenses to be worked.

In this difficult framework of restricted available materials and the need to balance supporting characteristics with particular needs for such rigidity requirements for the various machining processes it has now proven necessary to also cope with environmental needs and increasing cost pressure.
Document DE 4003002 teaches a blocking piece for blocking an optical article, comprising at least two parts, a first part and a second part. A working surface for supporting an optical article to be blocked is constituted at least in part by the first part and at least in part by the second part, wherein the first part has a first part top surface and the second part has a second top surface, wherein the first part top surface and the second part surface form the working surface, and wherein the first part has a first annular peripheral surface with a first annular diameter, the first annular peripheral surface extending from the first part top surface towards a bottom of the first part, and a second annular peripheral surface with a second annular diameter, the second annular surface extending from the first annular surface towards a bottom of the first part.

Document WO 03/018253 teaches a method for manufacturing spectacle lenses using a blocking piece, comprising the steps of blocking a spectacle lens blank with its blocking face on the working surface of the blocking piece using a blocking material, ii. processing the blocked spectacle lens blank on the second face and optionally the edge to obtain a processed spectacle lens, and releasing the processed spectacle lens from the block piece, wherein the spectacle lens blank remains on the proposed block piece throughout the whole processing stage or step (ii).

### OBJECT OF THE INVENTION

The object of the present invention is to provide a blocking piece for holding an optical workpiece, in particular a spectacle lens, for processing thereof, which blocking piece serves to solve the drawbacks previously cited of the techniques known in the art and enables in particular spectacle lenses with high optical qualities to be produced with smaller impact to the environment and at lower cost, without restrictions as to the lens geometries usually processed in prescription workshops while allowing a universal use during the entire process that may include vacuum deposition, spin coating together with the usual lathing, grinding or milling = generating and polishing steps. The object of the invention further encompasses the provision of a set of blocking pieces as well as of a method for manufacturing spectacle lenses using such a blocking piece or set of blocking pieces. Obviously the blocking piece should preferably be compatible with existing machining equipment.

### SUMMARY OF THE INVENTION

The above object is solved by a blocking piece comprised of at least two parts, at least one part being designed for multiple use and at least one part being designed for single use, wherein a working surface for supporting one face of an optical article to be blocked is constituted at least in part by the reusable part and at least in part by the single use part.
The reusable part has a reusable part top surface and the single use part has a single use part top surface, wherein the reusable part top surface and the single use part surface form the working surface. The reusable part has a first annular peripheral surface with a first annular diameter, the first annular peripheral surface extending from the reusable part top surface towards a bottom of the reusable part, and a second annular peripheral surface with a second annular diameter, the second annular surface extending from the first annular surface towards a bottom of the reusable part, the second annular diameter being larger than the first annular diameter, thereby forming an abutting shoulder for the single use part.

Heretofore it was found to be possible to cope with the need in respect to the capability to provide for adequate support for effective working conditions by using grinding and milling in opting for a blocking piece of one single suitable material. However, such a single throw away part cannot be recycled. Alternatively the most usual concept of having a base portion made of hard metal with a lens supporting part made of a specific low temperature melting alloy is prone to environmental issues as well. Surprisingly it was now found possible to use instead of a continuous single piece and single material supporting surface a blocking piece having the supporting surface composed of two parts, thus increasing the freedom to design either part. In doing so the center part of the blocking piece can be designed to be a reusable part with most exact tolerances and with high rigidity so as to allow proper chucking. The part supporting the optical object at the place or in the vicinity of the intended machining however can be designed as a single use part. In doing so it is possible to provide this part at particularly low cost and having small impact on the environment, e.g. in choosing a material that can be handled after usage in the same way as chips of the optical article or by using a material that can be easily separated therefrom. Most astonishingly it was found that using a supporting surface composed of different parts can have further unexpected advantages such as improved thermal characteristics during machining, improved bonding capacities and improved optical properties allowing for enhanced inspection options and most adequate curing of bonding material, e.g. photocurable adhesive.

Preferably the working surface formed by the re-usable part and the single-use part defines a continuous, in particular a continuous and step free surface designed to support the optical article to be blocked. Such a configuration is helpful in providing for a most uniform bonding material or adhesive layer and reduces any risks of inducing unwanted stresses into the optical article.

According to the invention, the reusable part and the single use part are arranged concentrically with respect to each other. A concentrically arrangement allows to easily maintain a more or less adequate rotational symmetry that is not needed in all circumstances, but possibly beneficial for processes that require high rotational speeds like in polishing and spin-coating. Furthermore, the support of the optical article can be improved and is usually most balanced. Finally, the bonding or curing of the adhesive can advantageously fix the separate parts together, wherein the parts can optionally be held together by adhesive in any existing space between the parts and/or the bonding versus the optical article. Hence the junction between the parts will be simultaneously reached or bridged, such that e.g. a ring shaped single use part will be affixed to the re-usable part over the entire junction surface at one single and specific moment in time so as to avoid any stresses that might be transmitted to the optical article. Transmitted stresses are particularly detrimental when the optical article is thin. Preferably the parts are unified together with the optical article.

Preferably the reusable part is configured and arranged for engagement with a chucking tool as used in a device for grinding, polishing, depositing etc. For such a purpose the re-usable part will usually be the centre part and could be comprised of a strengthening structure such as an overmoulded glass ring, a metal surrounding collar or could be made of a particularly well suited material. In Practice it is beneficial if the re-usable part is at least in part translucent or transparent but provides at the same time for adequate stiffness and hardness for the chucking process. The separation of the blocking piece into a re-usable part and a single use part as above allows also to compensate for eventually induced deformations in the chucking center portion that will not be transposed towards the outer peripheral areas beyond the junction between the at least two parts.

In a preferred embodiment at least the single use part is made of plastic material, formed preferably by injection moulding, in particular of a translucent and more preferably of a transparent material. In fact both parts could be made from injection molded plastic material, however the re-usable part of the blocking piece will need to have better resistance as to deformation but as well against abrasion, whereas the single-use part should be particularly adapted to allow proper machining, the material should allow to build up chips without being as such too prone to brittle. Injection moulded plastic parts are particularly unexpensive and allow for mass production, thus allowing to use a wide range of geometries and materials available.

Preferably the re-usable part and the single-use part comprise at least a mating surface section, in particular the re-usable part and the single-use part being designed to cooperate snuggly, by a form fit and/or using connecting means such as thread or clipping means. The provision of mating forms allows to avoid the creation of voids that would be detrimental for e.g. vacuum or spin coating as voids tend to hold back moisture that might degas or contaminate any formed layer on the optical article.

In a particularly preferred embodiment the re-usable part and the single-use part exhibit tolerance coping means, in particular a gap design to be filled with a bonding material, in particular the bonding material used during blocking of the optical article. Astonishingly it was found that it is possible to provide the supporting surface for the optical article to be blocked by several parts that interact with little play for compensating tolerances, whereas the void areas are subsequently filled with bonding material or adhesive.

In a preferred embodiment the re-usable part comprises and preferably is composed of translucent, in particular transparent material. The use of a translucent or transparent re-usable part is advantageous in that aside of the option to use photocurable adhesives and of optical inspection of the optical article during machining it is also possible to check the integrity of re-usable part efficiently using well known optical analysing tools once the re-usable part has was unblocked and is intended for the next use.

In summary one aspect of the present invention is to provide a block piece for holding an optical workpiece, in particular a spectacle lens, for processing thereof, comprising a single use part providing for a section of the supporting surface and a re-usable part or a basic body that has a further section of the workpiece mounting face portion against which the workpiece can be blocked by means of a blocking material, and a clamping portion via which the workpiece blocked on the basic body can be fixed in a machine or apparatus for processing of the workpiece. The reusable part of the block piece may be comprised of mineral glass or a plastic material, while guaranteeing suitable optical and mechanical supporting properties in spite of respecting existing constraints in costs and workability due to the provision of a single use part made preferably of an easy to work material such as plastic, so as to avoid undue use of machining tool. The invention provides for a blocking piece being adapted to be used as a universal holding element usable over the entire process and also allowing to be used in any kind of surfacing/processing machine including thin film coating processes.

The invention also provides for a set of blocking pieces, composed of respectively a blocking piece as described above wherein each blocking piece is comprised of a reusable part and a single use part, both parts having corresponding surface characteristic with respect to the surface portion intended to support the optical article to be blocked whereas another blocking piece of said set is composed as a re-usable part and a single use part, both having corresponding surface characteristics, different from the optical characteristics of the first blocking piece so as to be suitable for accommodating and supporting optical articles of a family having different shape and/or configuration.

A preferred set of blocking pieces is designed and configured so as to be suitable for blocking optical lenses as optical articles, wherein the reusable part and the single use part define a common base curve adapted for at least some of the lenses of a lens family, respectively. In the ophthalmological field is usual to provide as a prescription basis a family of lenses or lens blanks, such that the final machining is performed on a blank that has been previously chosen to be a suitable approximation. All members of a lens family show similar characteristics and accordingly it is beneficial to have a corresponding "family" or rather set of blocking pieces.

A preferred set of blocking pieces is comprised of five to seven different blocking pieces and/or of blocking pieces being different with respect to each other by at least one dioptre. It has proven beneficial to have a sufficient but restricted number of blocking pieces, e.g. each suitable for or having a particular base curve. In the example of seven blocking pieces it would be conceivable to have seven reusable parts each having as supporting surface a curvature corresponding to a particular power, let's say of 1, 2, 3, 4, 5, 6 and 7 diopter. The single use parts at a number of seven as well would each have a matching curvature. It is to be noted that it is also possible to provide the usually softer and more easily deformable single use part with a slightly different radius so as to provide a small preload or a bonding being stronger or weaker as compared to the bonding versus the reusable part.

The invention also provides for a method for manufacturing spectacle lenses according to a prescription, comprising the steps of: i. engaging the single use part with the reusable part, wherein the reusable part and the single use part are arranged concentrically with respect to each other, to form a working surface for supporting one face of a spectacle lens to be blocked (ii) blocking a lens blank with a blocking face on a workpiece mounting face portion provided commonly by a re-usable part and a single-use part of a blocking piece with the aid of a blocking material, the lens blank having a second face, opposite the blocking face, and an edge between the blocking face and the second face, (iii) processing the blocked lens blank on the second face and, if required, the edge to obtain a processed lens, and (iv) deblocking the processed lens from the block piece; wherein one and the same block piece as described above is used on which the blocked lens blank remains throughout step (iii).

Since the spectacle lens blank remains on the block piece, at least on the re-usable part thereof throughout the whole processing step, the latter can be carried out faster and more efficient with less handling effort as compared to the conventional approach where the lens blank needs to be deblocked and blocked again in the processing stage. This reduces the manufacturing costs and even allows for more automation in the prescription workshops. The approach according to the invention also serves to ensure the production of spectacle lenses with high optical qualities because one and the same geometrical relation between lens blank and block piece is maintained throughout the whole processing stage, thus any errors that are consequential on the conventional re-blocking approach where the orientation of the lens blank relative to the assigned different block pieces may unintentionally change upon re-blocking are avoided. Further, as the lens blank is always held on the block piece as standardized interface and handling means during the processing stage, the risk that an operator unintentionally touches the lens blank - thereby possibly causing problems in a coating substep - is reduced. A further advantage consists in the fact that all production information can be kept on the block piece, for instance by means of a "transponder" integrated in or fixed to the block piece, as proposed in the generic document EP 1 593 458 A2 , which offers full tracking possibility throughout the whole process.

Continuing the concept of the invention, the above processing step (iii) may comprise the following substeps: machining of the blocked lens blank to give the second face a macrogeometry according to the prescription; fine machining of the blocked lens blank to give the second face the required microgeometry including polishing; cleaning the blocked lens blank that has been machined and fine machined; if required, spin or dip coating of the blocked lens blank in order to provide the second face with a hard coating, or a primer, or a primer and a hard coating; vacuum coating of the blocked lens blank to provide an antireflection coating and, if required, a top coating such as hydrophobic and/or oleophobic and/or dust repelling coating on the second face; and, if required, edging of the blocked lens blank to give the edge the required geometry so that the processed lens is ready for insertion into a spectacle frame or a spectacle holder. Since there is no deblocking step inbetween the aforementioned processing stages any more, some processing substeps could even be carried out in a - as compared to the conventional time sequence - different sequence where a certain fixed sequence is not necessary from a product point of view, in particular all machining operations including edging could be carried out prior to the coating process(es) if desired or required.

Finally, it is preferred for the blocking face of the lens blank to be fully finished prior to the above blocking step (ii), including hard coating, antireflection coating and, if required, top coating such as hydrophobic and/or oleophobic and/or dust repelling coating. In this instance the blocked spectacle lens blank could advantageously be shipped from the lens manufacturer to the prescription workshop where only the second face and, if required, the edge of the lens blank would need to be processed to obtain a spectacle lens ready for insertion into / mounting to the spectacle frame, wherein the first face of the lens blank would be protected by the block piece until the finished spectacle lens is deblocked. This approach would also minimize the production efforts in the prescription workshop.

Although in one preferred embodiment the several parts are made from the same material, e.g. injection moulded plastic material it is also possible to use different materials having different rigidity, stiffness and/or hardness. Preferably at least one of the materials and even more preferred both materials and/or parts being translucent. Indeed the person skilled in the art knew about blocking pieces made of a rather hard clamping portion and a disc shaped lens support made of a soft alloy. Further translucent single material blocking pieces have been suggested as indicated above.

Preferably both materials/parts have different optical properties. Having different optical properties allows for generating an optical function at the adjoining surfaces without adding additional optical active elements such as reflective coatings or the like that would also be usable to enhance this kind of optical effect for improving illumination uniformity or non-uniformity as needed.

Preferably both materials/parts are translucent and most preferably the blocking piece is void of non-translucent elements. The use of as many translucent as possible and in particular transparent elements - most preferably showing little absorption - allows to avoid shading of material to be cured and thus inappropriate blocking or local adhesion. This allows for most uniform curing, but at the same time also for optical or visual inspection of the bonding quality as well as with respect of the lens actually worked.

Preferably one or both materials have similar optical proprieties compared to the optical article or lens to be blocked. In opting for similar optical proprieties light diffraction at the adjoined surface between the blocking piece and the opticle article or lens to be worked, usually comprised of a more or less uniform and more or less thick adhesive layer can be set to particular needs or avoided. Indeed it might be interesting to have the assembly of the blocking piece with the optical article or lens bonded thereto to act as a well defined optical system such that the progress of the work can be followed easily using optical inspection or analysis of light transmitted through such an assembly. This can provide for an easy in-situ monitoring of the process. Another example would be a temperature monitoring during the process. Assuming that the resulting optical analysis such as deflection of the obtained assembly is responsive to a temperature or a temperature gradient a monitored deflection pattern could be used to ascertain the avoidance of overheating the lens during mechanical working thereof. Here any kind of optical analysis based on interference or deflection might be used as well.

In a particularly preferred embodiment the one material is fixedly attached, in particular embedded into the other material. Such a configuration allows to locally strengthen the blocking piece, in particular the re-usable part where high righty or support is needed whereas in other location such as within the single use part an easy workability could be provided for. One example of such an embodiment could be to overmould a mineral glass ring with polymeric material so as to build the base body of the blocking piece, configured to be the re-usable part. The connecting element might in such a configuration be an integral part of the mineral glass or fixedly attached thereto. Another example could consider an annular strengthening ring made for instance of a preferably polished or reflective metal ring surrounding e.g. an upper portion of the connecting portion or chucking portion of the blocking piece.

According to the invention the blocking piece comprises at least two elements. In a preferred configuration, these can be loosely arranged before blocking. Such a configuration could allow for more ease in handling different base curves. A particularly preferred embodiment could provide an external ring as a single use part, e.g. made of one particular material adjoining a central portion of the blocking piece as a re-usable part, commonly defining said adjoining annular surface. Such an embodiment is most cost efficient as the disposable or impaired part (single use part) of the blocking piece during mechanical working can be produced at little costs. The two separate elements could be mutually engaged by a press fit or any kind of snap fit, however it is also possible that the two elements are unified by means of the adhesive and the optical article or lens blocked thereto.

In the embodiments as above or independently it is preferable that one material is formed to have an annular shape at least in part surrounding the other material. Such a configuration allows for instance to arrange for a metal ring around a portion serving to be engaged by a collet chuck and or to have a ring element with particularly well suited material regarding workability at an outer edge. Of course a configuration of several concentric and/or parallel annular elements is conceivable as well.

Preferably at least the outer perimeter of the blocking piece, e.g. the reusable part is made to conform in rigidity/stiffness/hardness the lens to be blocked. In using conforming materials the induced stresses due to mechanical working and temperature changes can be minimized.

A preferred blocking piece comprises radial extending zones of physical particularity, such as ribs. Those radial extending zones of physical particularity may serve various purposes such as taking the function of a light guide, a light kollimator, a light scattering element, a rigidifying rib and the like without nevertheless impairing the capability to be rotated at high speeds such as during a spin coating step.

Further effects and advantages of the proposed block piece(s), the set of blocking pieces and method for manufacturing spectacle lenses according to a prescription will become apparent to the skilled person from the following description of currently preferred examples of embodiment of the invention.

### BRIEF DESCRIPTION OF THE DRAWINGS

Herein below, the invention will be explained in more detail on the basis of preferred examples of embodiment and with reference to the appended, partially schematic drawings. In the drawings:
FIG. 1 shows schematically a first embodiment of the present invention, wherein the blocking piece is made of two distinct elements each comprised of a different material. The schematic illustrations show the assembly step and the finished blocking piece.
FIG. 2 shows a schematically sectional view of a second preferred embodiment making use of identical materials for the two parts making up the blocking piece.
FIG. 3 shows a third preferred embodiment in a sectional view together with a detail thereof and in a bottom view.
FIG. 4 shows a fourth preferred embodiment being a slight modification of the third preferred embodiment as illustrated in FIG 3.
FIG. 5 shows schematically two elements of a set of blocking pieces according to the invention.
FIG. 6 shows a flow chart of a lens machining process carried out using the blocking piece of the invention engaged with a standard interface of the machining tool as defined by German DIN 58766.

The preferred embodiment of the present invention will now be described in more detail, wherein it is to be noted that the following description is given for illustrative purposes, only and not with the intention to restrict the scope of protection to any of the illustrated and discussed preferred embodiments. In particular, the person skilled in the art will be well aware that any single feature described in detail with respect to one preferred embodiment could also be used separately from features described in the same embodiment or in combination with features of another embodiment. Furthermore, it should be understood that all given indicia as to material choices, sizes, measures and the like are as well to be considered as examples only, and if any of them would prove to be an essential feature again such feature should be considered as distinguishing if taken separately or in conjunction with other features described herein, irrespective as to whether such feature combination is explicitly mentioned or rather obtainable by omitting one or more single/isolated feature(s) from any of the described embodiments.

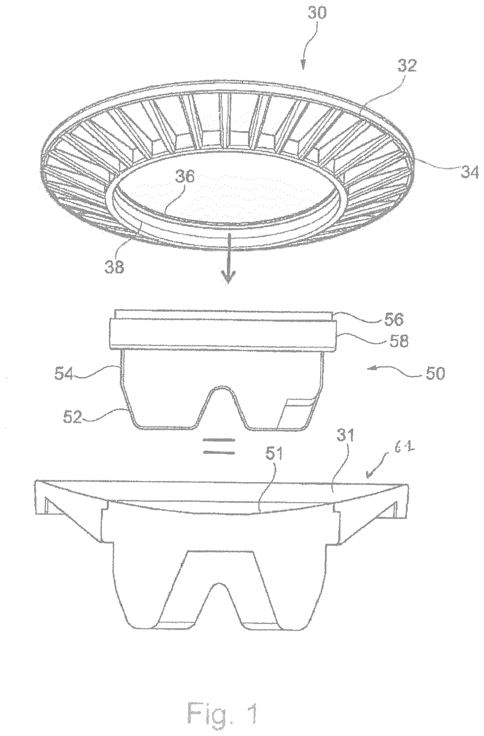

The first preferred embodiment as illustrated in FIG. 1 can be assembled by juxtaposing a basically ring shaped element 30 - the single use part - with a basically disk or block shaped element 50 - the reusable part. By juxtaposing the two elements 30, 50 a blocking piece, basically in a shape as well known is obtained, wherein the respective top surfaces 31 and 51 do together provide for the surface allowing to block a spectacle lens blank that is intended to be worked. The lower portion provides for a standard clamping portion via which the spectacle lens blank blocked on the blocking piece can be fixed in a machine or an apparatus for processing (i. e. surfacing, coating, edging, tinting, cleaning, etc. as the case may be) of the spectacle lens blank.

In the illustrated embodiment the re-usable part or element 50 is a glass block, e.g. made from mineral glass which is sufficiently stiff, rigid and hard in order to allow for engagement with a working machine such that the blocking piece complies with German standard DIN 58766. The glass block is showing comparatively little deformation and comprises on its bottom the well-known configuration with responding notches and cut-outs. In order to allow easy insertion and correct clamping the glass block is provided with a chamfer surface 52 and a cylindrical surface 54. In the upper area of the glass block there is provided a first annular surface 56 forming the edge with the concave or convex support surface 51. A little bit further downward a second annular surface 58 with slightly larger diameter is provided. As the person skilled in the art will appreciate the two annular surfaces 56 and 58 allow proper engagement with a single use ring shape element 30. The ring shape or annular element 30 is accordingly provided with a mating inner annular surface portion 38 and an annular protrusion 36, as an example of fourth and third annular surfaces. With both of said surfaces and the annular element 30 and the glass block 50 cooperating one can obtain a basically flush surface, that could be concave as in the illustrated embodiment, but as well convex in case needed.

It is to be noted that the two surfaces 31 and 51 are comprised preferably of the same surface curvature. In other words the blocking surface is preferably having a constant radius and for practical reasons it has proven to be preferable of having several blocking pieces (a set of blocking pieces having preferably between five and seven different blocking pieces) available with different surface radii, so as to be capable of supporting most intimately various lenses. The use of different base curves is well known for monomaterial block pieces, and hence this concept will not be detailed herein. Although in the illustrated embodiment the supporting surface is structured such that the surface 51 of the glass block and the surface 31 of the ring shaped part do commonly provide for the supporting surface with one single and particularly specified radius. One could also contemplate to use one glass block (re-usable part) with a fixed radius in the medium range and to provide for the specific adaptation of the best radius suitable to support the lens blank by using different ring shaped single use elements 30, thus providing a block piece with adaptable base curve. It should further be noted that although in the illustrated embodiment only one single ring shaped or annular element is used an assembly using a plurality of concentric ring shaped elements is conceivable as well, the single elements could have identical or variable surface curvatures, e.g. increasing towards the perimeter of the block piece.

It is therefore noted that the entire surface formed by the reusable part top surface 51 and the single use top surface 31 forms a working surface 61 against which a lens blank is lying for the process of manufacturing the lens blank, in particular the treatment of the optical surfaces thereof. As a result the lens is supported on its entire surface and can better withstand the processing forces during the manufacturing process. The lens is less deformed. This measure improves the surface accuracy of the lens significantly.

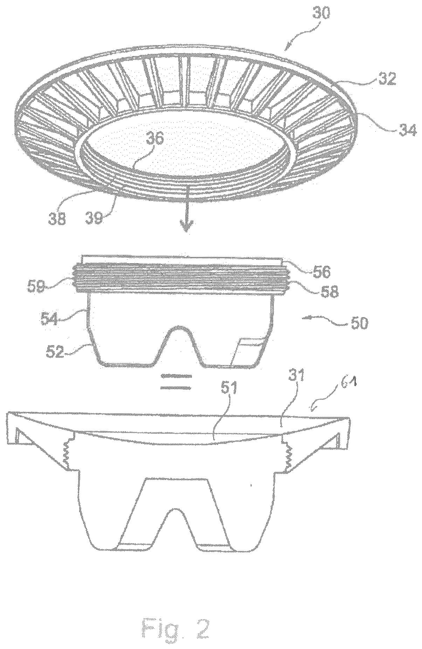

Coming back to the illustrated preferred embodiment of FIG. 1 the ring shaped or annular element 30 is presently made from a plastic material, in particular an injection moulded plastic material part. The plastic material is preferably a plastic material that has proven to be usable in such processing, i.e. having little outgassing, being resistant to usually encountered processing temperatures, does not interfere with the material of the lens blank and thus allowing secure blocking and unblocking using the well-known bonding material etc.. Preferably the material is either such that the chips obtained during machining can be processed further together with chips resulting from the optical article being machined or such that the respective materials can be separated easily. The plastic material is preferably neither harmful for the operator nor the environement, representing a huge advantage over the previously used heavy metal alloys. The engagement of the annular or ring shaped plastic part with respect to the glass block can be provided by a mating form configuration as illustrated, but as well using a snap fit configuration (as will be discussed later) or also by providing a threaded configuration (cf. Embodiment of Figure 2) or the like. It is to be noted that it has been found to be preferable if the assembly does not use any bonding material except for the one that is used for adhering the lens blank to the upper surface.

The plastic ring shaped element can be produced at very low cost by means of for example injection moulding and the hardness of the annular plastic ring element allows for proper workability without undue tooling fatigue. The rigidity and/or stiffness of the annular part may be improved by using various ribs such as the ribs 34 illustrated in figure 1. The outer perimeter could comprise a rib defining rim 32 it is however to be noted that for a later processing of the lens blank it is most preferred that all rigidity providing or enhancing components do extend in a radial direction, only. In the specific case of the embodiment of figure 1 the outer rim 32 will disappear during the first edging step since the blocking piece is designed such that the lens blank to be worked will rest on the surfaces 31 and 51 in such a manner that the final lens would still be slightly larger in the radial extension than the glass block. As such the entire edging process can be performed such that the full working area of the lens blank is always supported by the annular element 30, without however performing the edging in such a way that the cutting, grinding or milling tool would interfere with the glass block. Hence, the reusable part always remains intact and the single use part can be specifically adapted towards workability as it is conceived to be used only once.

As can be seen from the above the glass block, which of course could also be made from any other rigid or stiff and hard material can be reused and it is simply sufficient to replace the annular plastic ring part for each new lens block to be worked. The plastic annular or ring shaped element 30 presents a multitude of advantages versus the previously commonly used alloy disk. In particular there is among others no more need to thoroughly collect the grinding or milling residues since the plastic material is less harmful than the usually used alloy. The plastic material is also more competitive cost wise and the material mix, i. e. using a strong stiff and/or rigid center block part and a easily workable annular part allows a most optimized adaptation towards the need of tool engagement either with the machining chuck or with respect to the working tool.

The embodiment as shown in FIG. 1 has proven to be most suitable for blocking a lens blank using a photo curable bonding material or adhesive and therefore both the block element 50 as well as the annular element 30 are made of translucent material, in the present case those materials are both transparent thus allowing to transmit light trough the blocking piece and through the lens blank. The fact that the blocking piece is allowing light transmission, in particular for UV-light permits a most uniform curing over the entire surface 31 and 51. The transparency, but also translucent configuration allows for optical monitoring of the quality of the bonding between the blocking piece and the lens blank during the various processing steps. As an example the blocking piece with the fixed lens blank could be optically analysed by irradiating a particular pattern and monitoring said pattern after transmission through the assembly of the block piece and the lens blank.

A beneficial feature adding a further advantage to the embodiment can be realised when analysing the embodiment of figure 1 and resides in the existence of annular adjoining surfaces such as the surfaces 38 and 58, mainly, but also 36 and 56. The surfaces 38 and 58 are adjoining radial or ring shaped surfaces that allow proper alignment of the two elements on the one hand and during blocking a little defined play and/or stress compensation in the axial direction while allowing at the same time a huge degree of design freedom as to the optical characteristics. In particular the adjoining ring shaped surfaces can be designed such that the entire surface composed of the surfaces 31 and 51 be properly irradiated with UV-light for curing the adhesive.

The person skilled in the art will realize that either one or both of the surfaces 38 and 58 could be provided with a specific surface treatment or surface characteristic so as to allow to scatter the light in case needed or to focus the light in specifically desired areas. Similarly, the first annular surface 56 and the third annular surface of the protrusion 36 could be provided with a specific surface treatment or surface characteristic so as to allow to scatter the light in case needed or to focus the light in specifically desired areas. A further option could reside in the possibility to initiate the curing process in the center area or alternatively all to the contrary initiate the bonding process between the lens blank and the block piece on the periphery or as a further alternative to contemplate to have the bonding process to begin close to the adjoining area that would otherwise most likely considered to be shaded. The specific configuration according to the invention using an annular ring shaped adjoining surface configuration does indeed allow to take benefit both of the respective mechanical properties of the two materials but as well of the optical effect provided by the fact of using either materials having closely matched optical characteristics or alternatively different optical characteristics. In any case the person skilled in the art is provided with a ring shape optical element from which he can take benefit in conceiving the curing during blocking and unblocking but also for monitoring or inspection purposes.

Obviously the person skilled in the art can use most versatile designs. For example he could provide an alternating pattern of reflective element and non-reflective elements around the surface 58 such that light transmission in the radial direction is enhanced at location where the stiffening ribs 34 of the plastic ring shaped elements are provided such that those reinforcing ribs can provide for the double functionality to also act as a light guide.

In FIG. 2 an alternative embodiment is shown. The second preferred embodiment is also relying on the beneficial effect of having two distinct parts, a reusable centre part and a single use ring shaped outer part. In this embodiment both parts are made from the same material and are obtained from injection moulding. Again the two parts are provided in such a manner that they show an annular interface or junction surface. The annular shape of the junction as illustrated by reference signs 36 and 56 allows to compensate for differences in mechanical behaviour of the two parts, such as due to different thicknesses and can be helpful in adsorbing vibrations during the machining process of the lens blank and at the same time can provide an optical adaptive system for improving the blocking process if based on photo curable adhesives. Additionally the engagement between the two parts is secured using threads as illustrated at reference signs 39 and 59. In the illustrated embodiment the thread extends approximately over the lower third of the annular junction area. As with the embodiment show in FIG. 1 the blocking piece comprises on its upper surface a concave receiving surface for accommodating a convex lens blank surface and on the opposite side a chuck-engaging portion.

Obviously the embodiment of Fig. 2 can serve again for supporting a lens blank in all kinds of processing steps whether those includes spin coating, edging, grinding or other working steps and compared to the embodiment of Fig. 1 it appears possible to have the blocking piece made as an integral one single piece part made of two distinct materials. This configuration might be beneficial in light of logistics, however the entire blocking piece then becomes non-reusable. In light of the fact that the embodiment as shown in FIG. 2 is however conceivable at very low cost it could be contemplated to already fix the blocking piece to the lens blank in the lens blank manufacturing facility.

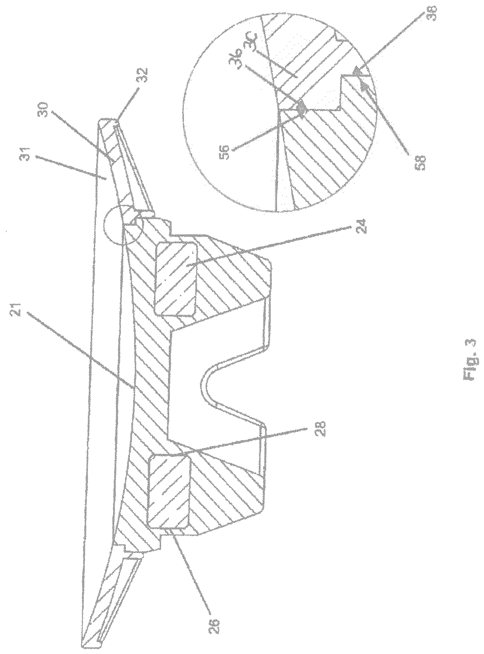

In FIG. 3 a third preferred embodiment according to the present invention is illustrated in a bottom view, a sectional view and a detailed view. In the bottom view one can realize the well-known standard configuration for allowing to have the blocking piece engaged with a corresponding apparatus or machine for working such as edging, polishing, grinding, coating etc. As can best be seen in the sectional view the here illustrated embodiment is comprised of a first element, made here from injection moulded plastic material. The element is once again transparent or at least translucent and is provided on the top with the supporting surface 21 allowing to have a lens blank blocked thereto, preferably using a photo curable adhesive. In order to cope with the relatively high radial forces of the chucking process this embodiment is provided with an annular glass insert overmoulded by an injection moulded plastic material. Both components are translucent and in particular transparent and the overmoulded glass insert 24 is positioned such that the surface 21 can maintain its configuration irrespective of forces applied to the tool engagement portion serving to fixedly hold ant to rotate or otherwise manipulate the block piece. Aditionally or alternatively an annular strengthening element (not illustrated) could be provided on the outer side of the reusable part with a cone shaped or chamfered guiding surface and a tool engaging surface. The use of the strengthening ring 24 can successfully minimize any deformation in the plastic part and can thus avoid any deformation of the surface 21 which would in particular when thin lens blanks are worked also result in a distortion of the lens being worked.

Once again and similarly to the first illustrated embodiment the person skilled in the art will realize that the junction surfaces 26 and 28 can be configured specifically to improve optical behaviour. It is to be noted that for ease of production it would be best to provide the optical characteristics on the overmoulded glass insert ring.

It is clear that surfaces 26 and 28 can be provided with different optical characteristics as may be needed for instance the inner annual surface 28 might be highly polished for increasing the focusing capacity whereas the outer surface 26 might be slightly roughened in order to allow a higher portion of the light being scattered towards the peripheral portions of the blocking piece.

It is to be noted that the location and size of the ring material can be used to adjust the rigidity or stiffness of the blocking piece. E.g. if the mineral glass ring is extending from the area of the tool engagement up to the vicinity of the concave surface the block piece will be more rigid and stiff as compared to a block piece where a thick plastic layer exists between the lens blank and the glass ring. The different thermal characteristics do provide for another design feature. A glass ring close to the supporting surface will obviously render a thermal dissipation of heat within the blocked lens blank more effective.

In the preferred embodiment as illustrated in FIG. 3, is comprised of an over moulded glass ring 24 e. g. of mineral glass that is embedded into a transparent injection moulding material forming a reusable center block part provided on the top portion thereof with a concave surface 21 capable of supporting a lens blank that should be worked. Once again the lens blank is preferably fixed thereto using photo curable adhesive. Similarly as with the embodiment as shown in FIG. 1 a ring shaped peripheral portion is provided that during grinding and edging will support the perimeter of lens blank and that will be worked with the lens blank. The lens blank is at the same time supported and blocked via the center blocking element composed of the mineral glass ring 24 and the surrounding embedding material. This part of the block piece is providing for a reusable element of the blocking piece. As can thus be seen in the detail view the outer plastic ring part is engaged with the center block part in a manner to once again create an annular adjoining surface. The annular adjoining surface is providing both for beneficial optical characteristics and beneficial mechanical characteristics since the material can be specifically adapted for the best result. In the particular embodiment of FIG. 3 it is interesting to note that the use of the same or two different plastic materials together with an overmoulded glass ring is possible thus allowing for a most advantageous thermal decoupling during the edging process as the blocking piece itself does present little thermal energy transmitting in a radial direction as prior art blocking pieces would do.

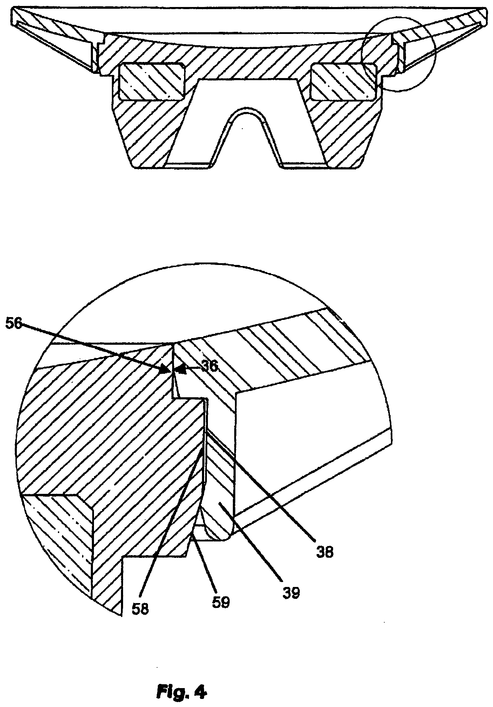

In FIG. 4 a further preferred embodiment is illustrated. In light of the third embodiment being very similar to the fourth embodiment the elements and components similar will not be described in detail again, it is however interesting to note on the detailed view that in contrast to the previous embodiments the outer plastic ring part is now snap fitted with the center element, again composed of an overmoulded glass ring with plastic material. However the person skilled in the art should realize that the center element could also be a full material mineral glass block such as in the first preferred embodiment. The snap engagement is provided in that the most lower portion of the ring shaped element is slightly protruding inwardly as illustrated at reference sign 39 in order to cooperate with a corresponding chamfer 59 on the central element.

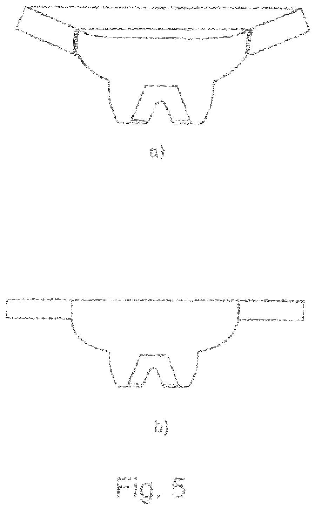

In FIG. 5 two elements of a set of blocking pieces are illustrated. On the left handed side the blocking piece is having a rather strong curvature whereas the blocking piece on the right side is rather shallow. The blocking pieces as such can be configured according to any of the previously explained configuration and thus reference can be given to the above description of the preferred embodiments of the various blocking pieces.

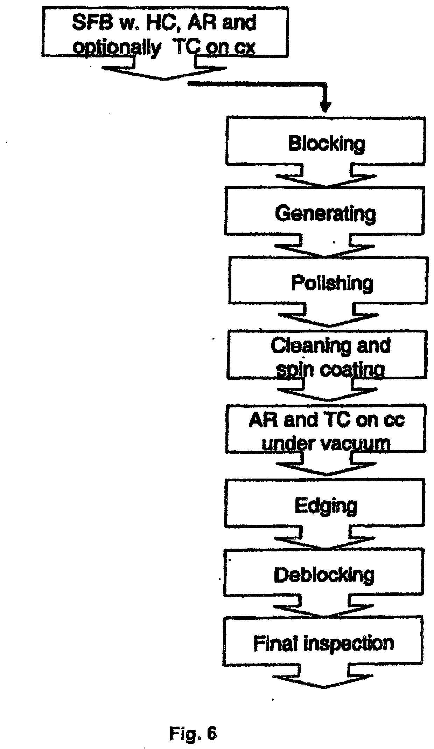

Finally, FIG. 6 shows by means of a flow chart the main process steps of a method for manufacturing spectacle lenses according to a prescription with the aid of a block piece as described above.

Basically, this method comprises the steps of: (i) blocking a spectacle lens blank B with its blocking face cx on the workpiece mounting face portion of the block piece with the aid of a blocking material, (ii) processing the blocked spectacle lens blank on the second face and optionally the edge to obtain a processed spectacle lens, and (iii) deblocking the processed spectacle lens from the block piece, with the characterizing feature that the spectacle lens blank B remains on the proposed block piece throughout the whole processing stage or step (ii). According to FIG. 7, the latter stage or step generally comprises the following substeps: "Generating", i.e. machining of the blocked spectacle lens blank to give the second face cc a macrogeometry according to the prescription; "Polishing", i.e. fine machining of the blocked spectacle lens blank to give the second face cc the required microgeometry; cleaning the blocked spectacle lens blank that has been machined and fine machined; (optionally) spin (or dip) coating of the blocked spectacle lens blank in order to provide the second face cc with a hard coating HC, or a primer, or a primer and a hard coating; vacuum coating of the blocked spectacle lens blank B to provide an antireflection coating AR (normally consisting of four to seven layers made up of two to four materials with different refractive indices) and (optionally) a top coating TC such as a hydrophobic and/or oleophobic and/or dust repelling coating on the second face cc; and (optionally) edging of the blocked spectacle lens blank B to give the edge E the required geometry so that the processed spectacle lens, after deblocking and final inspection, is ready for insertion into a spectacle frame or a spectacle holder. Since the single processing substeps and the equipment used in those are well known to the person skilled in the art, further explanations in this respect are not required at this point.

As can further be seen from FIG. 6, for the reasons indicated in the introductory portion of the description already, it is preferred that the blocking face cx of the spectacle lens blank B is fully finished prior to the above blocking step (i), including hard coating HC, antireflection coating AR and optionally top coating TC such as (super) hydrophobic and/or oleophobic and/or dust repelling coating, i.e. the blocking face cx of the spectacle lens blank B would carry the multilayer system prior to blocking.

A blocking piece for holding in particular a spectacle lens blank, a set thereof and its use are proposed, which comprises a basic body having a workpiece mounting face portion against which the workpiece can be blocked with a blocking material, and a clamping portion via which the blocked workpiece can be fixed in a machine/apparatus for processing it. The basic body consists of a material having defined low water absorption and/or is sealed to at least reduce outgassing of water moisture under vacuum conditions, so that the block piece is adapted to be used also in vacuum coating processes. This piece is specifically designed to be reusable. Alternatively or in addition, the clamping portion is adapted to be clamped by forces directed essentially perpendicular to the radial direction to cancel out each other and not deform the basic body, and/or the workpiece mounting face portion is provided with a predetermined amount of prism.

In summary, the invention can be said to provide for the very first time a blocking piece made of two distinct parts, a reusable part and a single use part, both contributing in the provision of the supporting surface. The same, similar but also different materials making up the body portion thereof (main body and supporting portion) with one or both of them being translucent and in particular transparent can be used. The optional feature of having an annular adjoining surface allows to even better cope with all mechanical and cost constraints while at the same time allowing an enhanced degree of freedom to optically design the blocking piece. In particular it has for a long time been believed to be rather impossible to have different materials when wishing to use photo curable adhesive. Shading problems and the like where considered to be predominant. In other words hereinbefore multimaterial blocking pieces where exclusively opaque, whereas blocking pieces comprised of translucent or transparent material were exclusively made from a single material, exception made of course from elements as such not constituting the blocking piece body, such as springs, stud screws etc.. Decomposing the supporting surface so as to be provided by different pre-fabricated parts has not been considered ever hereinbefore. Apparently the before described embodiments are for illustrative purpose only and this scope of the protection should only be defined by the appended claims.

## Claims

1. Blocking piece for blocking an optical article, comprising at least two parts (30, 50), at least one reusable part (50) being designed for multiple use and at least one single use part (30) being designed for single use, wherein a working surface (61) for supporting one face of an optical article to be blocked is constituted at least in part by the reusable part (50) and at least in part by the single use part (30), wherein the reusable part (50) has a reusable part top surface (51) and the single use part (30) has a single use part top surface (31), wherein the reusable part top surface (51) and the single use part surface (31) form the working surface (61), the reusable part (50) and the single use part (30) being arranged concentrically with respect to each other,
and
wherein the reusable part (50) has a first annular peripheral surface (56) with a first annular diameter, the first annular peripheral surface (56) extending from the reusable part top surface (51) towards a bottom of the reusable part, and a second annular peripheral surface (58) with a second annular diameter, the second annular surface (58) extending from the first annular surface (56) towards a bottom of the reusable part, the second annular diameter being larger than the first annular diameter, thereby forming an abutting shoulder for the single use part.

2. Blocking piece according to claim 1, wherein the working surface (61) is a continuous and step free surface.

3. Blocking piece according to claim 1, wherein the reusable part top surface (51) and the single use part top surface (31) have the same curvature.

4. Blocking piece according to any one of claims 1 to 3, wherein the single use part (30) is a ring shaped outer part and the reusable part (50) is a central block designed to be engaged with the ring shaped outer part (30).

5. Blocking piece according to any one of claims 1 to 4, wherein the reusable part (50) is configured and arranged with a chucking engaging portion for engagement with a chucking tool as used in a device for generating, polishing, coating etc., wherein the chucking engagement portion is located on an opposite side to the single use part top surface.

6. Blocking piece according to any of the preceding claims, wherein the reusable part (50) and the single use part (30) comprise at least a mating surface section (36, 38, 56, 58), in particular the reusable part and the single use part being designed to cooperate snugglingly, by a form fit and/or using connecting means such as thread or clipping means.

7. Blocking piece according to any of the preceding claims, wherein the single use part (30) has a third peripheral annular surface (36) extending from the single use part top surface (31) towards a bottom of the single user part, and a fourth annular peripheral surface (38) extending from the third peripheral annular surface (36) towards a bottom of the single use part, wherein the third annular surface (36) cooperates with the first annular surface (56), and the fourth annular surface (38) cooperates with the second annular surface (58).

8. Blocking piece according to any of the preceding claims, wherein at least one of the first, second, third and fourth peripheral annular surfaces (36, 38, 56, 58) is provided with at least one of a surface characteristics for light scattering or focusing, and of an alternating pattern of reflective elements and non reflective elements.

9. Blocking piece according to any of the preceding claims wherein the reusable part (50) and the single use part (30) have tolerance coping means, in particular a gap design to be filled with a bonding material, in particular the bonding material used during blocking of the optical article.

10. Blocking piece according to any of the preceding claims wherein the single use part (30) has axially extending reinforcing ribs (34).

11. Blocking piece according to any of the preceding claims wherein the reusable part (50) is provided with a over-moulded glass insert (24) for strengthening the reusable part.

12. Blocking piece according to any of the preceding claims wherein the reusable part (50) comprises and preferably is composed of translucent, in particular transparent material, and wherein at least the single use part (30) is made of plastic material, being translucent and more preferably transparent.

13. Set of blocking pieces, composed of respectively at least two blocking pieces according to one of the preceeding claims, wherein a first blocking piece is comprised of a reusable part and a single use part, both parts having corresponding surface characteristic with respect to the surface portion intended to support the optical article to be blocked whereas a second blocking piece of said set is composed as a reusable part and a single use part, both having corresponding surface characteristics, different from the optical characteristics of the first blocking piece so as to be suitable for accommodating and supporting optical articles of a family having different shape and/or configuration.

14. Set of blocking pieces according to claim 13, wherein the optical articles to be blocked are optical lenses and wherein the reusable part (50) and the single use part (30) define a common base curve adapted for at least some of the lenses of a lens family, respectively.

15. Set of blocking pieces as defined in claim 13 or in claim 14, wherein the set is comprised of five to seven different blocking pieces and/or of blocking pieces being different with respect to each other by at least one dioptre.

16. Method for manufacturing spectacle lenses using a blocking piece according to any one of the preceding claims 1 to 12 or a set of blocking pieces according to any one of claims 13 to 15, comprising the steps of:
i. engaging the single use part (30) with the reusable part (50), wherein the reusable part and the single use part are arranged concentrically with respect to each other, to form a working surface (61) for supporting one face of a spectacle lens to be blocked,
ii. blocking the spectacle lens blank with its blocking face on the working surface of the blocking piece using a blocking material,
iii. processing the blocked spectacle lens blank on the second face and optionally the edge to obtain a processed spectacle lens, and
iv. releasing the processed spectacle lens from the block piece, wherein the spectacle lens blank remains on the proposed block piece throughout the whole processing stage or step (iii).

## Patentansprüche

1. Blockstück zum Blocken eines optischen Gegenstandes, das mindestens zwei Teile (30, 50) umfasst, wobei mindestens ein wiederverwendbares Teil (50) zur mehrfachen Verwendung und mindestens ein Einwegteil (30) zur einmaligen Verwendung eingerichtet ist/sind, wobei eine Arbeitsfläche (61) zum Stützen einer Fläche eines zu blockenden optischen Gegenstandes mindestens teilweise durch das wiederverwendbare Teil (50) und mindestens teilweise durch das Einwegteil (30) gebildet wird, wobei das wiederverwendbare Teil (50) eine obere Fläche (51) des wiederverwendbaren Teils und das Einwegteil (30) eine obere Fläche (31) des Einwegteils aufweist, wobei die obere Fläche (51) des wiederverwendbaren Teils und die obere Fläche (31) des Einwegteils die Arbeitsfläche (61) bilden, wobei das wiederverwendbare Teil (50) und das Einwegteil (30) konzentrisch zueinander angeordnet sind,
und
wobei das wiederverwendbare Teil (50) eine erste ringförmige Umfangsfläche (56) mit einem ersten ringförmigen Durchmesser aufweist, wobei sich die erste ringförmige Umfangsfläche (56) von der oberen Fläche (51) des wiederverwendbaren Teils zu einem Boden des wiederverwendbaren Teils erstreckt, und eine zweite ringförmige Umfangsfläche (58) mit einem zweiten ringförmigen Durchmesser, wobei sich die zweite ringförmige Fläche (58) von der ersten ringförmigen Fläche (56) zu einem Boden des wiederverwendbaren Teils erstreckt, wobei der zweite ringförmige Durchmesser größer als der erste ringförmige Durchmesser ist, wodurch eine anstoßende Schulter für das Einwegteil gebildet wird.

2. Blockstück nach Anspruch 1, bei welchem die Arbeitsfläche (61) eine durchgehende und stufenlose Fläche ist.

3. Blockstück nach Anspruch 1, bei welchem die obere Fläche (51) des wiederverwendbaren Teils und die obere Fläche (31) des Einwegteils die gleiche Krümmung aufweisen.

4. Blockstück nach einem der Ansprüche 1 bis 3, bei welchem das Einwegteil (30) ein ringförmiges Außenteil ist und das wiederverwendbare Teil (50) ein zentraler Block ist, zum Eingriff mit dem ringförmigen Außenteil (30) eingerichtet.

5. Blockstück nach einem der Ansprüche 1 bis 4, bei welchem das wiederverwendbare Teil (50) eingerichtet und angeordnet ist mit einem Spanneingriffsabschnitt für den Eingriff mit einem Spannwerkzeug, wie es in einer Vorrichtung zum Erzeugen, Polieren, Beschichten usw. verwendet wird, wobei der Spanneingriffsabschnitt auf einer der oberen Fläche des Einwegteils gegenüberliegenden Seite befindlich ist.

6. Blockstück nach einem der vorstehenden Ansprüche, bei welchem das wiederverwendbare Teil (50) und das Einwegteil (30) mindestens einen Gegenflächenabschnitt (36, 38, 56, 58) aufweisen, insbesondere sind das wiederverwendbare Teil und das Einwegteil so gestaltet sind, dass sie durch Formschluss und/oder unter Verwendung von Verbindungsmitteln wie Gewinde- oder Clipmitteln eng zusammenwirken.

7. Blockstück nach einem der vorstehenden Ansprüche, bei welchem das Einwegteil (30) eine dritte ringförmige Umfangsfläche (36), die sich von der oberen Fläche (31) des Einwegteils zu einem Boden des Einwegteils erstreckt, und eine vierte ringförmige Umfangsfläche (38) aufweist, die sich von der dritten ringförmigen Umfangsfläche (36) zu einem Boden des Einwegteils erstreckt, wobei die dritte ringförmige Fläche (36) mit der ersten ringförmigen Fläche (56) zusammenwirkt und die vierte ringförmige Fläche (38) mit der zweiten ringförmigen Fläche (58) zusammenwirkt.

8. Blockstück nach einem der vorstehenden Ansprüche, bei welchem mindestens eine der ersten, zweiten, dritten und vierten ringförmigen Umfangsflächen (36, 38, 56, 58) mit mindestens einer/einem von einer Licht streuenden oder fokussierenden Oberflächeneigenschaften und einem abwechselnden Muster aus reflektierenden und nicht reflektierenden Elementen versehen ist.

9. Blockstück nach einem der vorstehenden Ansprüche, bei welchem der wiederverwendbare Teil (50) und der Einwegteil (30) Toleranzmittel aufweisen, insbesondere ein Spaltmaß, zur Befüllung mit einem Verbindungsmaterial, insbesondere dem Verbindungsmaterial, das während des Blockens des optischen Gegenstandes verwendet wird.

10. Blockstück nach einem der vorstehenden Ansprüche, bei welchem das Einwegteil (30) axial verlaufende Verstärkungsrippen (34) aufweist.

11. Blockstück nach einem der vorstehenden Ansprüche, bei welchem der wiederverwendbare Teil (50) mit einem überformten Glaseinsatz (24) zur Verstärkung des wiederverwendbaren Teils versehen ist.

12. Blockstück nach einem der vorstehenden Ansprüche, bei welchem der wiederverwendbare Teil (50) transluzides, insbesondere transparentes Material umfasst, vorzugsweise aus diesem gebildet ist und bei welchem zumindest der Einwegteil (30) aus Kunststoffmaterial hergestellt ist, das transluzid und vorzugsweise transparent ist.

13. Satz von Blockstücken, bestehend aus jeweils mindestens zwei Blockstücken gemäß einem der vorstehenden Ansprüche, wobei ein erstes Blockstück aus einem wiederverwendbaren Teil und einem Einwegteil besteht, wobei beide Teile eine entsprechende Oberflächencharakteristik in Bezug auf den Oberflächenabschnitt aufweisen, der dazu bestimmt ist, den zu blockenden optischen Gegenstand zu stützen, während ein zweites Blockstück des Satzes aus einem wiederverwendbaren Teil und ein Einwegteil gebildet ist, die beide entsprechende Oberflächencharakteristiken aufweisen, die sich von den optischen Charakteristiken des ersten Blockstücks unterscheiden, um geeignet zu sein, optische Gegenstände einer Familie mit unterschiedlicher Form und/oder Konfiguration aufzunehmen und zu stützen.

14. Satz von Blockstücken nach Anspruch 13, bei welchem die zu blockenden optischen Gegenstände optische Linsen sind und bei welchem das wiederverwendbare Teil (50) und das Einwegteil (30) eine gemeinsame Basiskurve definieren, jeweils für mindestens einige der Linsen einer Linsenfamilie angepasst.

15. Satz von Blockstücken nach Anspruch 13 oder 14, bei welchem der Satz aus fünf bis sieben verschiedenen Blockstücken und/oder aus Blockstücken besteht, die sich voneinander um mindestens eine Dioptrie unterscheiden.

16. Verfahren zur Herstellung von Brillengläsern unter Verwendung eines Blockstücks nach einem der vorstehenden Ansprüche 1 bis 12 oder eines Satzes von Blockstücken nach einem der Ansprüche 13 bis 15, umfassend die folgenden Schritte:
i. In-Eingriff-Bringen des Einwegteils (30) mit dem wiederverwendbaren Teil (50), wobei das wiederverwendbare Teil und das Einwegteil konzentrisch zueinander angeordnet sind, um eine Arbeitsfläche (61) zum Stützen einer Fläche eines zu blockenden Brillenglases zu bilden,
ii. Blocken des Brillenglasrohlings mit seiner Blockfläche auf der Arbeitsfläche des Blockstücks unter Verwendung eines Blockmaterials,
iii. Bearbeiten des blockten Brillenglasrohlings an der zweiten Fläche und optional dem Rand, um ein bearbeitetes Brillenglas zu erhalten, und
iv. Lösen des bearbeiteten Brillenglases vom Blockstück, wobei der Brillenglasrohling während der gesamten Bearbeitungsstufe oder des Schritts (iii) an dem vorgeschlagenen Blockstück verbleibt.

## Revendications

1. Pièce de blocage pour bloquer un article optique, comprenant au moins deux parties (30, 50), au moins une partie réutilisable (50) étant conçue pour un usage multiple et au moins une partie à usage unique (30) étant conçue pour un usage unique, dans laquelle une surface de travail (61) pour supporter une face d'un article optique à bloquer est constituée au moins en partie par la partie réutilisable (50) et au moins en partie par la partie à usage unique (30), dans laquelle la partie réutilisable (50) a une surface supérieure de partie réutilisable (51) et la partie à usage unique (30) a une surface supérieure de partie à usage unique (31), dans laquelle la surface supérieure de partie réutilisable (51) et la surface de partie à usage unique (31) forment la surface de travail (61), la partie réutilisable (50) et la partie à usage unique (30) étant disposées concentriquement l'une par rapport à l'autre,
et
dans laquelle la partie réutilisable (50) a une première surface périphérique annulaire (56) avec un premier diamètre annulaire, la première surface périphérique annulaire (56) s'étendant de la surface supérieure de partie réutilisable (51) vers un fond de la partie réutilisable, et une deuxième surface périphérique annulaire (58) avec un deuxième diamètre annulaire, la deuxième surface annulaire (58) s'étendant de la première surface annulaire (56) vers un fond de la partie réutilisable, le deuxième diamètre annulaire étant plus grand que le premier diamètre annulaire, formant ainsi un épaulement de butée pour la pièce à usage unique.

2. Pièce de blocage selon la revendication 1, dans laquelle la surface de travail (61) est une surface continue et sans marche.

3. Pièce de blocage selon la revendication 1, dans laquelle la surface supérieure de partie réutilisable (51) et la surface supérieure de partie à usage unique (31) ont la même courbure.

4. Pièce de blocage selon l'une quelconque des revendications 1 à 3, dans laquelle la partie à usage unique (30) est une partie extérieure en forme d'anneau et la partie réutilisable (50) est un bloc central conçu pour être engagé avec la partie extérieure en forme d'anneau (30).

5. Pièce de blocage selon l'une quelconque des revendications 1 à 4, dans laquelle la partie réutilisable (50) est configurée et agencée avec une partie d'engagement de mandrin pour engagement avec un outil de mandrin tel qu'utilisé dans un dispositif pour la génération, le polissage, le revêtement, etc., dans laquelle la partie d'engagement de mandrin est située sur un côté opposé à la surface supérieure de pièce à usage unique.

6. Pièce de blocage selon l'une quelconque des revendications précédentes, dans laquelle la partie réutilisable (50) et la partie à usage unique (30) comprennent au moins une section de surface d'accouplement (36, 38, 56, 58), en particulier la partie réutilisable et la partie à usage unique étant conçues pour coopérer par emboitement, par un ajustement de forme et/ou en utilisant des moyens de connexion tels que des moyens de filetage ou de clippage.

7. Pièce de blocage selon l'une quelconque des revendications précédentes, dans laquelle la partie à usage unique (30) a une troisième surface annulaire périphérique (36) s'étendant de la surface supérieure de partie à usage unique (31) vers un fond de la pièce à usage unique, et une quatrième surface périphérique annulaire (38) s'étendant de la troisième surface annulaire périphérique (36) vers un fond de la pièce à usage unique, dans laquelle la troisième surface annulaire (36) coopère avec la première surface annulaire (56), et la quatrième surface annulaire (38) coopère avec la deuxième surface annulaire (58).

8. Pièce de blocage selon l'une quelconque des revendications précédentes, dans laquelle au moins l'une des première, deuxième, troisième et quatrième surfaces annulaires périphériques (36, 38, 56, 58) est pourvue d'au moins une/un parmi un caractéristique de surface pour la diffusion ou la focalisation de la lumière, et un motif alterné d'éléments réfléchissants et d'éléments non réfléchissants.

9. Pièce de blocage selon l'une quelconque des revendications précédentes, dans laquelle la partie réutilisable (50) et la partie à usage unique (30) présentent des moyens de prise en compte ou gestion de tolérance, en particulier une conception de fente à remplir avec un matériau de liaison, en particulier le matériau de liaison utilisé lors du blocage de l'article optique.

10. Pièce de blocage selon l'une quelconque des revendications précédentes, dans laquelle la partie à usage unique (30) présente des nervures de renforcement (34) s'étendant axialement.

11. Pièce de blocage selon l'une quelconque des revendications précédentes, dans laquelle la partie réutilisable (50) est munie d'un insert en verre surmoulé (24) pour renforcer la partie réutilisable.

12. Pièce de blocage selon l'une quelconque des revendications précédentes, dans laquelle la partie réutilisable (50) comprend et est de préférence composée d'un matériau translucide, en particulier transparent, et dans laquelle au moins la partie à usage unique (30) est faite de matière plastique, étant translucide et plus préférablement transparente.

13. Ensemble de pièces de blocage, composé respectivement d'au moins deux pièces de blocage selon l'une quelconque des revendications précédentes, dans lequel une première pièce de blocage est composée d'une partie réutilisable et d'une partie à usage unique, les deux parties ayant des caractéristiques de surface correspondantes par rapport à la partie de surface destinée à supporter l'article optique à bloquer, tandis qu'une deuxième pièce de blocage dudit ensemble est composée comme une partie réutilisable et une partie à usage unique, les deux ayant des caractéristiques de surface correspondantes, différentes des caractéristiques optiques de la première pièce de blocage de manière à être appropriées pour loger et supporter des articles optiques d'une famille ayant une forme et/ou une configuration différente.

14. Ensemble de pièces de blocage selon la revendication 13, dans lequel les articles optiques à bloquer sont des lentilles optiques et dans laquelle la partie réutilisable (50) et la partie à usage unique (30) définissent une courbe de base commune adaptée pour au moins certaines des lentilles d'une famille de lentilles, respectivement.

15. Ensemble de pièces de blocage selon la revendication 13 ou la revendication 14, dans lequel l'ensemble est constitué de cinq à sept pièces de blocage différentes et/ou de pièces de blocage qui sont différentes les unes des autres d'au moins une dioptrie.

16. Procédé de fabrication de verres de lunettes utilisant une pièce de blocage selon l'une quelconque des revendications précédentes 1 à 12 ou un ensemble de pièces de blocage selon l'une quelconque des revendications 13 à 15, comprenant les étapes suivantes
i. engager la partie à usage unique (30) avec la partie réutilisable (50), la partie réutilisable et la partie à usage unique étant disposées concentriquement l'une par rapport à l'autre, pour former une surface de travail (61) pour supporter une face d'un verre de lunettes à bloquer,
ii. bloquer l'ébauche de verre de lunettes avec sa face de blocage sur la surface de travail de la pièce de blocage à l'aide d'un matériau de blocage,
iii. traiter l'ébauche de verre de lunettes bloquée sur la deuxième face et, éventuellement, sur le bord pour obtenir un verre de lunettes traité, et
iv. libérer le verre de lunettes traité de la pièce de blocage, dans lequel l'ébauche de verre de lunettes reste sur la pièce de blocage proposée pendant tout le traitement ou l'étape (iii).
